# EUROPÄISCHE PATENTSCHRIFT

(11) **EP 2 286 655 B1**
(45) Veröffentlichungstag und Bekanntmachung des Hinweises auf die Patenterteilung: **25.01.2012**
(21) Anmeldenummer: 10170244.7
(22) Anmeldetag: 21.07.2010
(51) Int. Cl.: A01D 41/12, A01F 12/40

(54) **Erntegutrestehäcksel- und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 20.08.2009 DE 102009028766
(43) Veröffentlichungstag der Anmeldung: 23.02.2011
(73) Patentinhaber: DEERE & COMPANY, Moline, Illinois 61265-8098 (US)
(72) Erfinder: Weichholdt, Dirk, 57200, Woelfling les Sarreguemin (FR); Klein, Oliver, 66740, Saarlouis (DE)
(74) Vertreter: Holst, Sönke

(56) Entgegenhaltungen:
- WO-A1-03/071857
- DE-A1-102006 017 404
- US-A1- 2005 245 301
- US-A1- 2007 015 556

## Beschreibung

Die Erfindung betrifft eine Emtegutrestehäcksel- und -verteilanordnung für einen Mähdrescher.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende Wurfpaddel umfassen, sind zu Zwecken einer richtungsänderungslosen Gutübergabe in einer Ebene angeordnet. Um die Wurfgebläse herum sind Ummantelungen angebracht, die sich zwischen den Wurfgebläsen in einer vorderen, dem Strohhäcksler zugewandten Spitze vereinigen. Im rückwärtigen Bereich sind die Ummantelungen ausgebrochen, um das Stroh auf das Feld abzugeben. Oberhalb der Wurfgebläse befindet sich eine Abdeckung, während an ihrer Unterseite keine Abdeckung vorhanden ist.

In der US 2007/0015556 A1 wird ein Mähdrescher mit einem Strohhäcksler beschrieben, bei dem der Auslass des Strohhäckslers die nachfolgenden Wurfgebläse von unten her an ihrem Umfang unter einem spitzen Winkel beaufschlagt. Oberhalb der Wurfgebläse befindet sich eine Abdeckung, während an ihrer Unterseite keine Abdeckung vorhanden ist. Die oberseitige Abdeckung ist mit einigen Öffnungen versehen, durch die oberhalb einer rotierenden Scheibe angebrachte Luftförderelemente Luft ansaugen. An der Unterseite der Scheibe sind die Wurfpaddel der Wurfgebläse befestigt. Die zusätzliche angesaugte Luft soll verhindern, dass sich Erntegutreste zwischen der Scheibe und der oberen Abdeckung oder an den Wurfpaddeln ansammeln.

Die DE 10 2007 037 485 B3 zeigt einen Mähdrescher, bei dem der Strohhäcksler die Erntegutreste im freien Flug abgibt und die Wurfgebläse in axialer Richtung unter einem spitzen Winkel beaufschlagt.

Die WO 2008/156419 A1 beschreibt eine ähnliche Anordnung des Strohhäckslers und Wurfgebläses, jedoch wird der Erntegutstrom stromab des Strohhäckslers durch ein Umlenkblech abgelenkt, so dass er in axialer Richtung, jedoch unter einem relativ spitzen Winkel auf das Wurfgebläse trifft. Dabei wird der mittlere Teil des Erntegutresteflusses weniger stark abgelenkt als der äußere Teil, um zu erreichen, dass die nach dem Verlassen des Strohhäckslers bereits vorhandene Geschwindigkeit der zu verteilenden Erntegutreste in einem möglichst hohen Maße ausgenutzt wird, indem die mit ihren Vorderseiten nach innen drehenden Wurfgebläse vor der Drehachse mit dem äußeren Teil des Erntegutresteflusses beaufschlagt werden, während der mittlere Teil des Erntegutresteflusses im Bereich rückwärtig der Drehachse gegen die Wurfgebläse geworfen wird. Die Wurfgebläse sind in Gehäusen angeordnet, die an ihrer axialen, beschickungsseitigen Stirnfläche, abgesehen von den Umlenkblechen, offen und an der anderen Stirnfläche geschlossen sind.

Im Stand der Technik sind die Wurfgebläse demnach an ihrer rückwärtigen Hälfte, auf der die Erntegutresteabgabe stattfindet, an einer axialen Stirnfläche durch eine Abdeckung abgedeckt, während sie auf der anderen axialen Stirnfläche (die sich bei der US 2007/0015556 A1, DE 10 2007 037 485 B3 und WO 2008/156419 A1 auf der Seite befindet, von der aus die Wurfgebläse durch den Strohhäcksler in axialer bzw. radialer Richtung unter einem Winkel beschickt werden und bei der DE 199 08 111 C1 an der Unterseite liegt) nicht abgedeckt sind. Als nachteilig hat sich hierbei erwiesen, dass die erzielte Wurfweite nicht in allen Fällen zur Abdeckung heutiger Schneidwerksbreiten ausreicht.

### Aufgabe der Erfindung

Die der Erfindung zu Grunde liegende Aufgabe wird darin gesehen, eine Emtegutrestehäcksel- und -verteilanordnung mit einem Strohhäcksler und zwei stromab des Strohhäckslers angeordneten Wurfgebläsen für einen Mähdrescher bereitzustellen, bei der die Wurfweite gegenüber dem Stand der Technik vergrößert ist.

### Lötung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Emtegutrestehäcksel- und -verteilanordnung für einen Mähdrescher umfasst einen Strohhäcksler und wenigstens ein bezüglich der Gutflussrichtung stromab des Strohhäckslers angeordnetes Wurfgebläse. Im Emtebetrieb zerkleinert der Strohhäcksler ihm zugeführte Erntegutreste, insbesondere Stroh. Er kann mit seinen Messern und ggf. zusätzlichen Förderpaddeln auch andere Erntegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese anderen Erntegutreste. Die vom Strohhäcksler heran geförderten Erntegutreste werden im Betrieb durch die um eine Drehachse in Drehung versetzbaren Wurfpaddel des Wurfgebläses in einem Annahmebereich angenommen und in einem Abgabebereich wieder abgegeben und über das Feld verteilt. Eine stirnseitige Abdeckung ist den Wurfpaddeln direkt (d. h. ohne dazwischen liegende Elemente, die einen Luftfluss verhindern würden; ein gewisser Abstand zwischen der Abdeckung und den Wurfpaddeln ist aber möglich) benachbart angebracht. Die stirnseitige Abdeckung ist bezüglich der Drehrichtung der Wurfpaddel vor dem Abgabebereich mit einer Aussparung versehen, durch welche die Wurfpaddel im Betrieb Luft ansaugen und im Abgabebereich wieder abgeben.

Auf diese Weise wird die Wurfweite des Wurfgebläses durch die zusätzliche aufgenommene Luft verbessert.

Vorzugsweise sind zwei Wurfgebläse seitlich nebeneinander angeordnet, die gegensinnig rotieren. Die Drehrichtung ist beliebig, wobei sich jedoch bewährt hat, wenn sich die dem Strohhäcksler zugewandten Bereiche der Wurfgebläse im Betrieb jeweils nach innen drehen.

Es wurde herausgefunden, dass die Luftabgabe durch die Wurfpaddel näherungsweise eine Viertel Drehung nach der Annahme durch die Aussparung stattfindet. Bei in ihren rückwärtigen Bereichen nach außen drehenden Wurfgebläsen bietet es sich demnach an, durch die Abdeckung (mit Ausnahme der Aussparung) die rückwärtige Hälfte der Wurfgebläse abzudecken, um den Abgabebereich in den äußeren, rückwärtigen Quadranten der Wurfgebläse zu legen. Dann befindet sich die Aussparung im inneren, rückwärtigen Quadranten des Wurfgebläses. Bei anderen Drehrichtungen der Wurfgebläse kann sich die Aussparung demgemäß im hinteren oder vorderen, äußeren Quadranten des Wurfgebläses befinden.

Die Form der Aussparung ist im Rahmen des erfindungsgemäßen Gedankens beliebig, so kann sie kreisförmig, rechteckig oder kreissektorenförmig sein, wobei die Spitze insbesondere der Drehachse des Wurfgebläses zugewandt ist. Bei einer bevorzugten Ausführungsform ist die Aussparung nach vorn durch eine sich quer zur Vorwärtsrichtung des Mähdreschers erstreckende Kante begrenzt. Nach außen kann sie durch eine sich nach hinten oder schräg nach hinten und außen erstreckende Kante begrenzt werden.

Um die gezielte Abgabe der Erntegutreste im rückwärtigen, äußeren Quadranten der Wurfgebläse zu bewirken, kann im inneren, rückwärtigen Quadranten des Wurfgebläses eine die Mantelfläche des Wurfgebläses nach außen abdeckende Abschirmung angebracht werden, deren Position vorzugsweise veränderbar ist.

Die Wurfpaddel können gemeinsam mit einem Teller drehbar angebracht sein, welcher sich auf der von der Abschirmung abgewandten Seite der Wurfpaddel befindet. An der von den Wurfpaddeln abgewandten Seite des Tellers kann sich ein weiterer Deckel befinden.

Hinsichtlich der Frage der Orientierung der Drehachse des Wurfgebläses und der Position der Abschirmung bestehen unterschiedliche Möglichkeiten. So kann der Strohhäcksler das Wurfgebläse in exakt radialer Richtung beaufschlagen (vgl. DE 199 08 111 C1) oder den radial äußeren Rand des Wurfgebläses unter einem spitzen oder stumpfen Winkel (s. US 2007/0015556 A1) oder die Erntegutreste werden dem Wurfgebläse in axialer Richtung unter einem spitzen oder stumpfen Winkel, mit (s. WO 2008/156419 A1) oder ohne (s. DE 10 2007 037 485 B3) Umlenkung der Erntegutreste stromab des Strohhäckslers durch ein Ablenkelement zugeführt. Dabei kann zwischen dem Strohhäcksler und dem Wurfgebläse ein zur Umgebung offener Spalt verbleiben, oder es wird ein Erntegutresteführungselement zwischen dem Auslass des mit einem konkaven Boden ausgestatteten Strohhäckslergehäuse und dem Wurfgebläse angebracht, das als reines Führungselement ausgebildet sein kann und den Erntegutrestestrom nicht ablenkt, oder ihn in einer gewünschten Richtung ablenkt, wie sie insbesondere in der WO 2008/156419 A1 beschrieben wird. Die Abschirmung kann sich an der Stirnseite des Wurfgebläses befinden, von der aus es in axialer oder radialer Richtung mit den Erntegutresten beaufschlagt wird, oder an der anderen Seite. Die Abschirmung kann demnach an der Ober- oder Unterseite des Wurfgebläses positioniert sein. Es können auch zwei Abschirmungen mit Aussparungen an beiden Stirnseiten des Wurfgebläses angebracht werden.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses,
- Fig. 3: eine Draufsicht auf den Strohhäcksler und die Wurfgebläse,
- Fig. 4: eine perspektivische Ansicht eines Erntegutresteführungselements,
- Fig. 5: eine perspektivische Ansicht der Wurfgebläse von hinten und unten mit abgenommenen Drehtellern und Wurfpaddeln, wobei beim rechten Wurfgebläse eine längere Abschirmung und bei linken Wurfgebläse eine kürzere Abschirmung in einer aktiven Stellung ist,
- Fig. 6: die Ansicht aus Fig. 5, wobei beim linken Wurfgebläse die kürzere Abschirmung in eine weiter zurückgezogene Stellung verbracht ist, und
- Fig. 7: die Ansicht aus Figur 6 mit montierten Drehtellern und Wurfpaddeln.

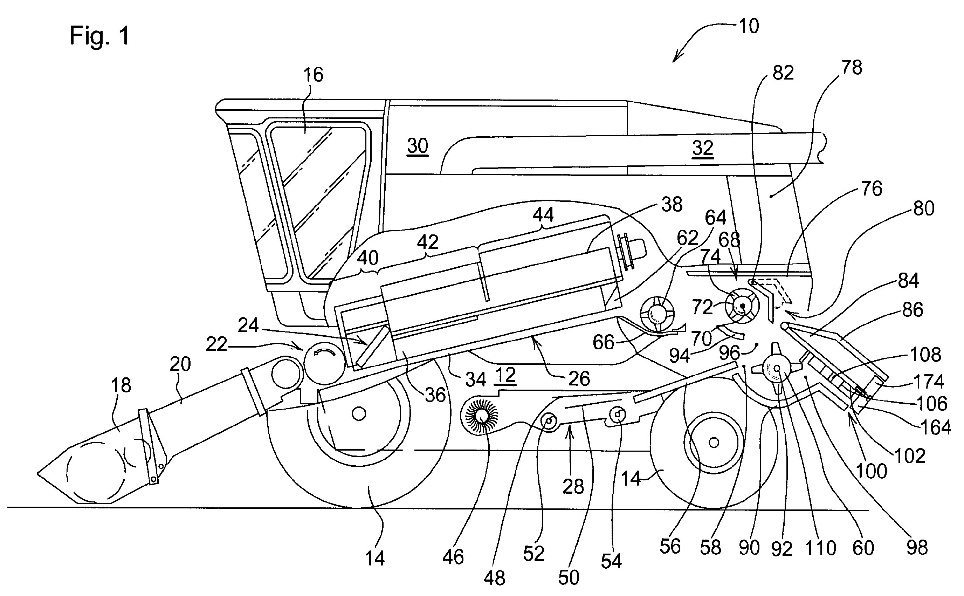

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vom und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Emtegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessem 96 zusammensetzt. Am Rotor 92 können auch zusätzliche Wurfpaddelpaddel (nicht gezeigt) befestigt werden, oder einige oder alle Häckselmesser 96 umfassen Paddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

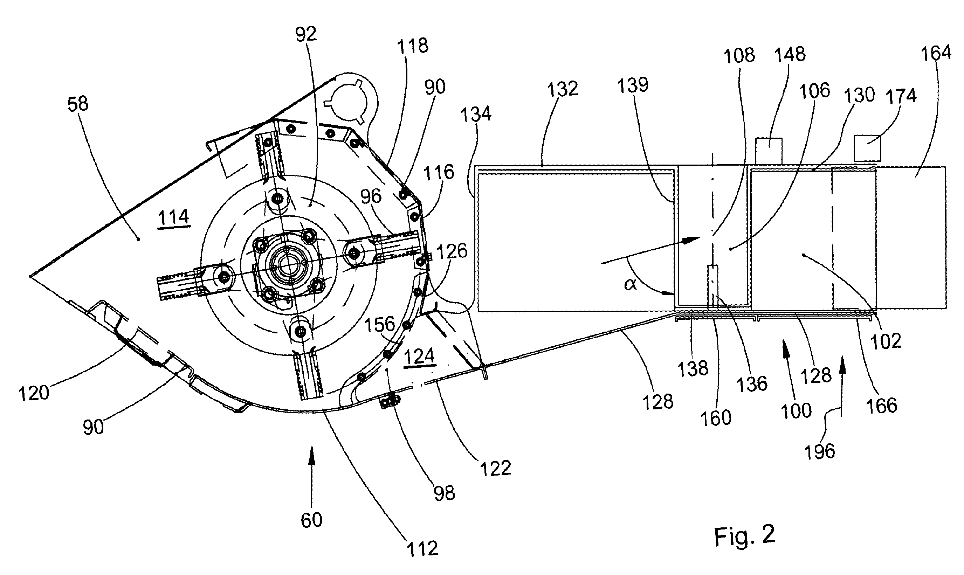

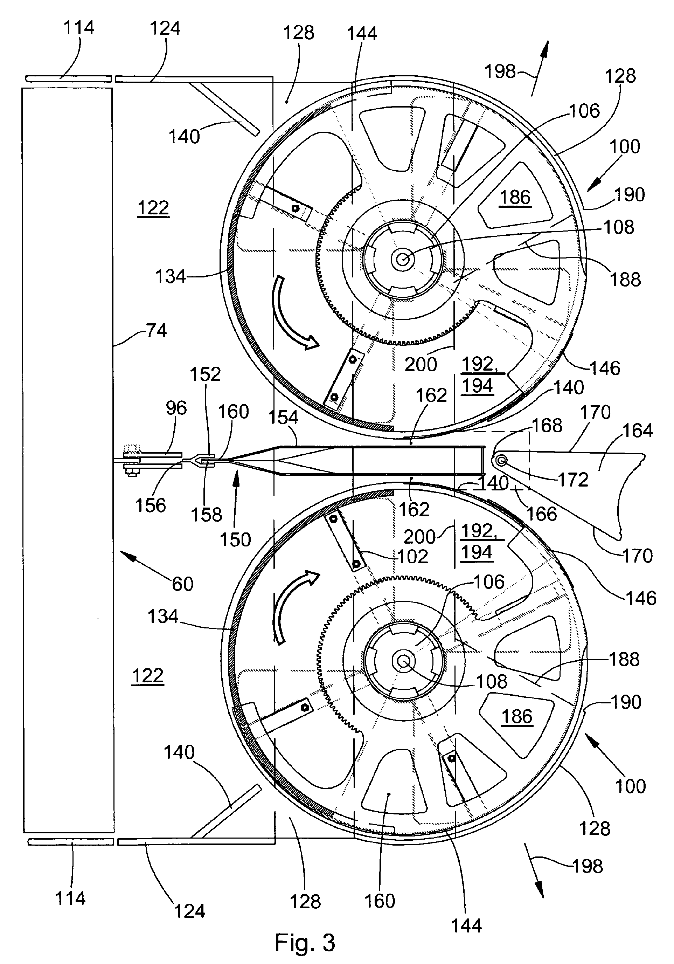

Es wird nun auf die Figuren 2 und 3 verwiesen, in welcher die Emtegutrestehäcksel- und -verteilanordnung des Mähdreschers 10 in einer Seitenansicht (Figur 2) und einer Draufsicht (Figur 3) dargestellt ist. Die Emtegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 74 umschließen. Der Boden 112 ist an der Unterseite des Strohhäckslergehäuses 90 angeordnet und umschließt den von den Häckselmessern 96 definierten Hüllkreis kreisbogenförmig in einem relativ geringen Abstand mit einem Radius. Es können auch Gegenmesser (nicht dargestellt) vorgesehen sein, die am Strohhäckslergehäuse 90 befestigt werden und in den Hüllkreis der Häckselmesser 96 eindringen, um die Erntegutreste effektiv zu zerkleinern.

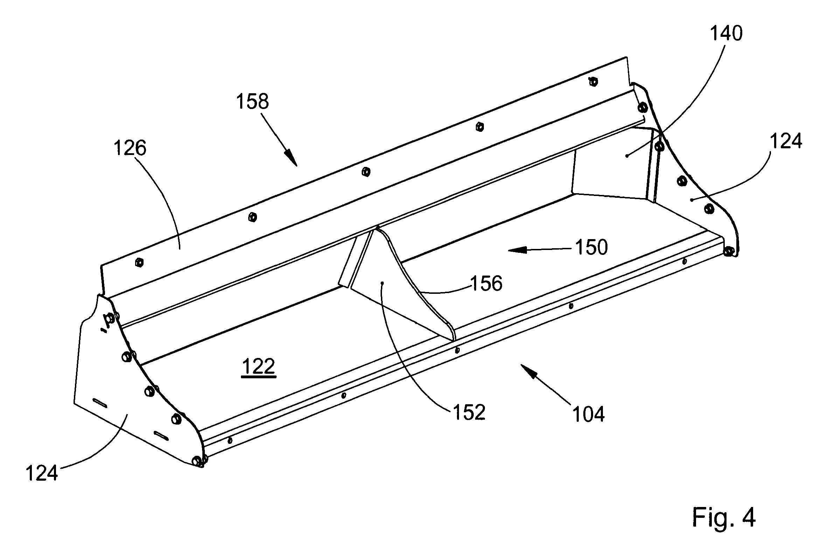

An den Boden 112 schließt sich in der Flussrichtung der Erntegutreste ein Emtegutresteführungselement 122 an, das in der Figur 4 in einer perspektivischen Ansicht dargestellt ist. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Emtegutresteführungselement 122 ist in sich eben (hat demnach einen Radius von ∞). Das Emtegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Erntegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. Es sei noch angemerkt, dass das Emtegutresteführungselement 122 einteilig mit dem Boden 112 hergestellt werden könnte, wie auch die Seitenwandverlängerungen 124 einteilig mit den Seitenwänden 114 hergestellt werden könnten. Die dargestellte, zweiteilige Ausführungsform kann jedoch den Strohhäcksler 60 ohne Emtegutresteführungselement 122 und Seitenwandverlängerungen 124 (oder mit einem anderen Emtegutresteführungselement und anderen Seitenwandverlängerungen, nicht gezeigt) in Kombination mit einem Verteilerboden mit verstellbaren Leitblechen verwenden.

An den Seitenwandverlängerungen 124 (s. Figur 4) sind äußere Leitelemente 140 befestigt, die sich unter einem Winkel von etwa 45° nach innen und hinten erstrecken. Sie sind in der Draufsicht rechteckig und können über ihre ganze Länge oder nur in ihrem vorderen Bereich, der sich an einen mit der Seitenwandverlängerung 124 verbundenen, parallel zu ihr erstreckenden Bereich anschließt, gekrümmt sein. In vertikaler Richtung sind die äußeren Leitelemente 140 flach. Es wäre auch möglich, die äußeren Leitelemente 140 zusätzlich oder ausschließlich am Erntegutresteführungselement 122 zu befestigen. Auch könnten sie in der Art eines Pflugschars oder einer Kufe geformt sein.

An der Unterseite der Wurfgebläse 100 ist eine abgewinkelte Abdeckung 128 angeordnet, das sich von einer Position kurz vor den Drehachsen 108 bis an das rückwärtige Ende der Wurfgebläse 100 erstreckt. Die Abdeckung 128 weist einen vorderen Abschnitt auf, der sich in der Ebene des Emtegutresteführungselements 122 erstreckt und mit einem nach unten abgewinkelten Flansch an einem nach unten abgewinkelten Flansch des Emtegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Unterhalb der Abdeckung 128 und der Hydromotore 106 befindet sich ein quer zur Vorwärtsrichtung erstreckender Querträger 160, an dem sich die Wellen 136 der Hydromotore 106 durch geeignete Lagerungen (nicht gezeigt) abstützen. In der Mitte des Querträgers 160 ist ein sich nach hinten erstreckender Träger 166 befestigt, der zur unteren Abstützung der Drehachse 172 eines Führungselements 164 dient, das weiter unten detailliert erläutert wird.

Die unten liegenden Ausgangswellen 136 der am Deckel 132 befestigten Hydromotoren 106 treiben die Wurfpaddel 102 über eine Querverbindung 138 und eine zylindrische Welle 139 an, die an ihrem oberen Ende an einem Teller 130 mit einer mittleren Öffnung befestigt ist. Die Wurfpaddel 102 der Wurfgebläse 100 erstrecken sich jeweils genau über die axiale Abmessung der Welle 139. Die Wurfpaddel 102 liegen mit ihren Oberseiten am Teller 130 an oder sind daran befestigt (z. B. angeschweißt). Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vom radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand vom Hüllkreis der Häckselmesser 96 angeordnet ist. Dadurch erreicht man, dass sich dort ansammelnde Erntegutreste, insbesondere bei feuchten Erntegutbedingungen, durch die Häckselmesser 96 entfernt werden, so dass sich keine unerwünschten, möglicherweise zu Verstopfungen führenden Ansammlungen von Erntegut an der Spitze 156 zu befürchten sind. An seiner Rückseite bildet der vordere Teil 152 einen Schlitz 158, in der ein flaches, vorderes Blech 158 des rückwärtigen Teils 154 eindringt. Rückwärtig des vorderen Blechs 158 verbreitert sich der rückwärtige Teil 154 und ist in sich hohl. Der rückwärtige Teil 154 ist an der Unterseite des Deckels 132 und an der Oberseite der Abdeckung 128 befestigt, welche mit den Teilummantelungen 134, 140 und den Abschirmungen 144, 146 ein Wurfgebläsegehäuse bilden.

Anhand der Figur 3 ist erkennbar, dass zwischen dem Leitelement 150 und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Erntegutrestestroms vom Strohhäcksler 60 nach hinten hindurch bis auf das Feld strömen kann.

Rückwärtig des rückwärtigen Teils 154 des Leitelements 150 ist ein bewegliches Führungselement 164 vorgesehen mit einer vorderen Spitze 168, die sich rückwärtig der Drehachsen 108 der Wurfgebläse 100 in deren Zwickelbereich befindet, und zwei divergierenden, seitlichen, geraden Wänden 170, die jeweils einem Wurfgebläse 100 benachbart angeordnet sind. Das bewegliche Führungselement 164 ist um eine vorn liegende Achse 172, die sich parallel zur Drehachse 108 der Wurfgebläse 100 erstreckt, durch einen oberhalb des Deckels 132 rückwärtig der Hydraulikmotoren 106 angebrachten Antrieb 174 in eine Schwingbewegung versetzbar. Hierzu wird auf die DE 10 2007 037 485 B3 und die DE 10 2008 055 003 A1 verwiesen.

Nun wird wieder auf die Figuren 2 und 3 Bezug genommen. Der vordere Abschnitt der Abdeckung 128 erstreckt sich vom nach unten abgewinkelten Flansch bis kurz vor die Drehachse 108 der Wurfgebläse 100 und geht dort in einen rückwärtigen Abschnitt über. Der rückwärtige Abschnitt der Abdeckung 128 erstreckt sich bis unter das rückwärtige Ende der Wurfgebläse 100 und orthogonal zur Drehachse 108. Der äußere Rand der Abdeckung 128 folgt vom Flansch her kommend dem Umfang der Wurfgebläse 100 bis zu einer rückwärtigen Spitze 190 im äußeren, rückwärtigen Quadranten 186. Dabei wird der rückwärtige, äußere Quadrant 186 der Wurfgebläse 100 nach unten nahezu komplett abgedeckt. Eine rückwärtige, innere Kante 188 erstreckt sich von der rückwärtigen Spitze 190 der Abdeckung 128, die sich geringfügig gegenüber der Drehachse 108 nach außen versetzt befindet, in einer Geraden schräg nach vorn und innen, bis sie gegenüber der Drehachse 108 nach innen versetzt den Querträger 160 erreicht. Die vordere Begrenzung der Aussparung 194 wird durch die rückwärtige Kante 200 des Querträgers 160 gebildet. In den inneren, rückwärtigen Quadranten 192 bildet die Abdeckung 128 somit eine ungefähr kreissektorförmige Aussparung 194.

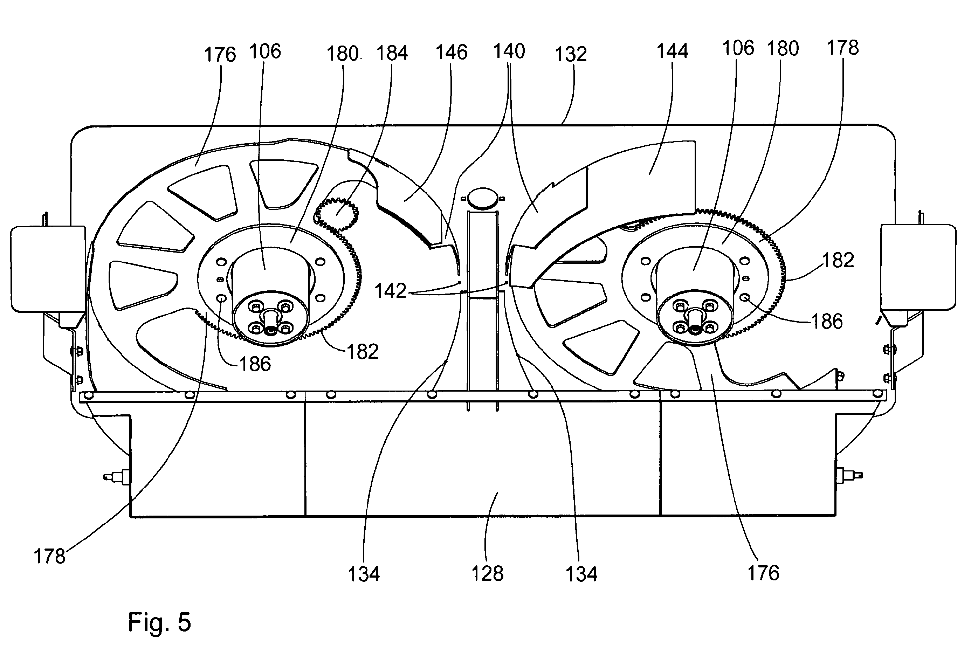

Die Teilummantelungen 140 sind, wie in den Figuren 5 bis 7 erkennbar, mit einem höheren, rückwärtigen Abschnitt und einem niedrigeren, vorderen Abschnitt ausgestattet, zwischen denen ein schräg ansteigender Bereich vorgesehen ist. Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 68 kontrollierten Verstellantriebs 148 an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

Die Abschirmungen 144, 146 sind jeweils gemeinsam und sich diametral gegenüberliegend an etwa halbkreisförmigen Drehhaltern 176 befestigt, die zwischen dem Deckel 132 und den Tellern 130 positioniert sind. Die Drehhalter 176 umfassen einen mittleren Bereich 178 mit einer zentrischen Öffnung, durch die sich die zugehörige Drehachse 108 des zugehörigen Wurfgebläses 100 erstreckt. Der mittlere Bereich 178 ist in axialer Richtung zwischen dem Deckel 132 und einer mit dem Deckel 132 verbundenen Halterungsscheibe 180 gelagert, insbesondere gleitgelagert. Die zentrische Öffnung des mittleren Bereichs 178 liegt in radialer Richtung an mit dem Deckel 132 und/oder der Halterungsscheibe 180 verbundenen Halterungselementen 186 in Form von Schrauben an und ist somit in radialer Richtung fixiert. Der mittlere Bereich 178 ist außen mit einer Verzahnung 182 versehen, die sich über einen Teil seines Umfangs erstreckt, und mit der ein mit dem Antrieb 148 gekoppeltes Zahnrad 184 kämmt.

Die ersten, längeren Abschirmungen 144 sind etwa rechteckig geformt mit einer abgewinkelten vorderen, unteren Ecke. Sie sind radial innenseitig der Teilummantelungen 140 positionierbar. Dadurch vermeidet man unerwünschte Kanten, an denen sich die relativ kleinen Erntegutreste verklemmen können, wenn sich die ersten Abschirmungen 144 in ihrer aktiven Position an der Innenseite der Teilummantelungen befinden, da dann die hierfür besonders kritische Spreu gefördert wird. Die ersten Abschirmungen 144 sind in radialer Richtung der Achsen 108 der Wurfgebläse 100 wesentlich länger als die Teilummantelungen 140.

Die zweiten, kürzeren Abschirmungen 146 sind ebenfalls etwa rechteckig geformt mit einer ausgesparten hinteren, unteren Ecke. Sie sind radial außenseitig der Teilummantelungen 140 positionierbar. Die Abmessungen der zweiten Abschirmungen 146 in radialer Richtung der Achsen 108 der Wurfgebläse 100 entspricht etwa den Abmessungen der Teilummantelungen 140 in radialer Richtung der Achsen 108 der Wurfgebläse 100.

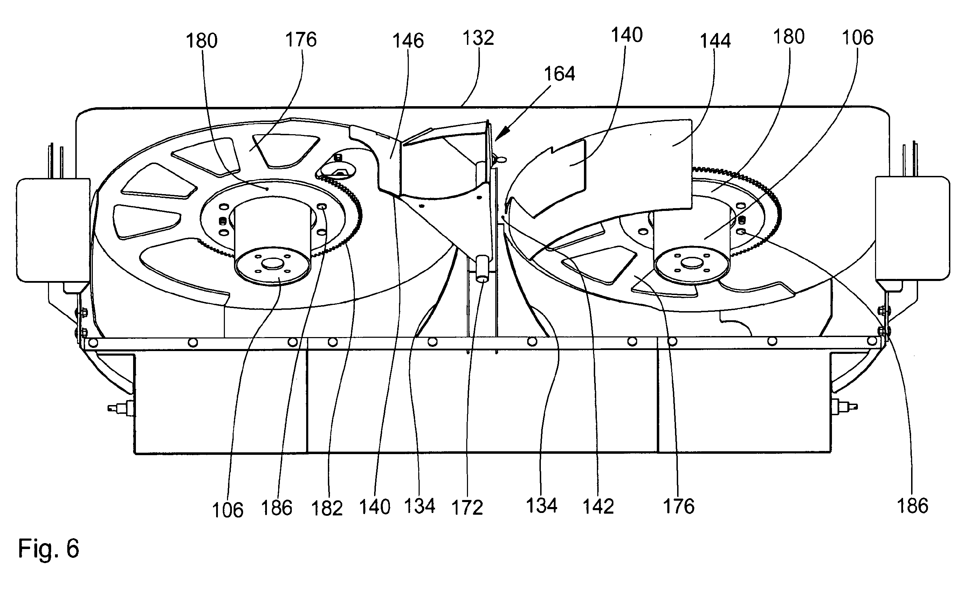

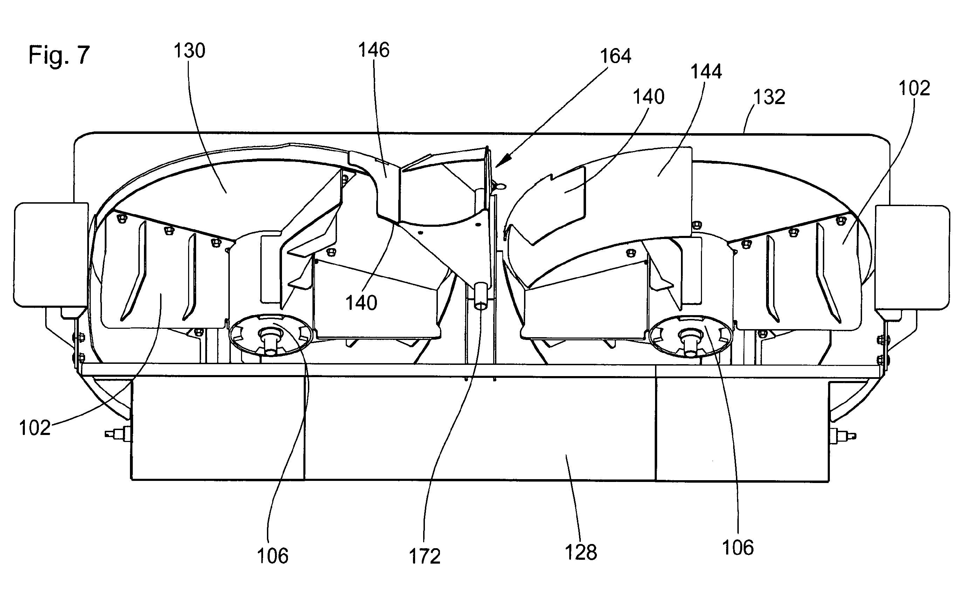

In der Figur 5 ist beim links eingezeichneten Wurfgebläse 100 die zweite Abschirmung 146 in der aktiven Stellung, in der sie sich nach hinten an die Teilummantelung 140 anschließt. Beim rechts eingezeichneten Wurfgebläse 100 ist die erste Abschirmung 144 in der aktiven Stellung, in der sie sich nach hinten an die Teilummantelung 140 anschließt. In der Figur 6, in welcher auch das Führungselement 164 mit eingezeichnet wurde, ist die Stellung der Abschirmung 144 des rechten Wurfgebläses 100 gegenüber der Figur 5 nicht verändert, während die Stellung der Abschirmung 146 des linken Wurfgebläses 100 gegenüber der Figur 5 im Uhrzeigersinn verstellt wurde, was dazu führt, dass die Erntegutreste vermehrt in der Nähe der Längsmittelebene des Mähdreschers 10 auf dem Feld abgegeben werden. Auf diese Weise können durch den Bediener oder selbsttätig Seitenwind- und Hangeinflüsse ausgeglichen werden, um die Erntegutreste möglichst gleichmäßig auf dem Feld zu verteilen. In der Figur 7 wurde die Stellung der Abschirmungen 144, 146 gegenüber der Figur 6 nicht verändert, aber die Teller 130 und die Wurfpaddel 102 mit eingezeichnet. Anders als in den Figuren 5 bis 7 dargestellt, könnten die ersten Abschirmungen 144 auch in eine Stellung verbracht werden, in der sie unmittelbar an die Teilummantelungen 134 anschließen, um die Lücken 142 zu schließen und zu erreichen, dass die Erntegutreste nur nach außen abgegeben werden.

Nach alledem ergibt sich folgende Funktion der Emtegutrestehäcksel- und -verteilanordnung im Erntebetrieb. Die aus Kaff und bei in der Figur 1 eingezeichneter Stellung stehender Klappe 80 aus Stroh bestehenden Erntegutreste gelangen durch den Einlass 58 in den Strohhäcksler 60 und werden dort, ggf. im Zusammenwirken mit (nicht eingezeichneten Gegenmessern) durch die Häckselmesser 96 zerkleinert und durch den Auslass 98 ausgeworfen. Die Erntegutreste strömen oberhalb des Erntegutresteführungselements 122 entlang und treffen in einem Annahmebereich, der oberhalb des vorderen Abschnitts der Abdeckung 128 gebildet ist, unter einem Winkel α von etwa 55° gegenüber der Drehachse 108 der Wurfgebläse 100 auf deren Wurfpaddel 102. Die Wurfpaddel 102 geben die Erntegutreste dann in einem Abgabebereich ab, der nicht durch die Abschirmungen 144 bzw. 146 abgedeckt wird und sich hauptsächlich im rückwärtigen, äußeren Quadranten 186 der Wurfgebläse 100 befindet. Durch die Aussparungen 194 können die direkt oberhalb der Abdeckung 128 rotierenden Wurfpaddel 102 von unten her Luft ansaugen (vgl. den Pfeil 196 in der Figur 2) und im rückwärtigen, äußeren Quadranten 186, der im normalen Betrieb nicht durch Abschirmungen 144, 146 abgedeckt wird, an der Mantelfläche der Wurfgebläse 100 wieder abgeben (vgl. die Pfeile 198 in der Figur 3), was die Wurfweite vergrößert.

## Patentansprüche

1. Erntegutrestehäcksel- und -verteilanordnung mit einem Strohhäcksler (60) und wenigstens einem stromab des Strohhäckslers (60) angeordneten Wurfgebläse (100), das um eine Drehachse (108) in Drehung versetzbare Wurfpaddel (102) und eine stirnseitige, den Wurfpaddeln (102) direkt benachbarte Abdeckung (128) umfasst und dessen Wurfpaddel (102) im Betrieb Erntegutreste vom Strohhäcksler (60) erhalten und in einem Abgabebereich auf ein Feld abgeben, **dadurch gekennzeichnet, dass** die stirnseitige Abdeckung (128) bezüglich der Drehrichtung der Wurfpaddel (102) vor dem Abgabebereich mit einer Aussparung (194) versehen ist, durch welche die Wurfpaddel (102) im Betrieb Luft ansaugen und im Abgabebereich wieder abgeben.

2. Emtegutrestehäcksel- und -verteilanordnung nach Anspruch 1, **dadurch gekennzeichnet, dass** zwei seitlich nebeneinander angeordnete, gegensinnig drehende Wurfgebläse (100) vorgesehen sind.

3. Erntegutrestehäcksel- und -verteilanordnung nach Anspruch 2, **dadurch gekennzeichnet, dass** die Wurfgebläse (100) mit ihren dem Strohhäcksler (60) zugewandten Seiten im Betrieb nach innen drehen.

4. Erntegutrestehäcksel- und -verteilanordnung nach Anspruch 3, **dadurch gekennzeichnet, dass** die Abdeckung (128), abgesehen von der Aussparung (194), die rückwärtige Hälfte der Wurfgebläse (100) abdeckt, dass der Abgabebereich im äußeren, rückwärtigen Quadranten (186) der Wurfgebläse (100) liegt und dass sich die Aussparung (194) im inneren, rückwärtigen Quadranten (192) des Wurfgebläses (100) befindet.

5. Erntegutrestehäcksel- und -verteilanordnung nach Anspruch 4, **dadurch gekennzeichnet, dass** die Aussparung (194) nach vorn durch eine sich quer zur Vorwärtsrichtung erstreckende Kante (200) begrenzt ist.

6. Erntegutrestehäcksel- und -verteilanordnung nach Anspruch 4 oder 5, **dadurch gekennzeichnet, dass** die Aussparung (194) nach außen durch eine sich nach hinten oder schräg nach hinten und außen erstreckende Kante (188) begrenzt ist.

7. Emtegutrestehäcksel- und -verteilanordnung nach einem der Ansprüche 1 bis 6, **dadurch gekennzeichnet, dass** im inneren, rückwärtigen Quadranten (192) des Wurfgebläses (100) eine die Mantelfläche des Wurfgebläses (100) nach außen abdeckende Abschirmung (144, 146) angebracht ist.

8. Emtegutrestehäcksel- und -verteilanordnung nach Anspruch 7, **dadurch gekennzeichnet, dass** die Position der Abschirmung (144, 146) veränderbar ist.

9. Emtegutrestehäcksel- und -verteilanordnung nach einem der Ansprüche 1 bis 8, **dadurch gekennzeichnet, dass** die Wurfpaddel (102) gemeinsam mit einem Teller (130) drehbar angebracht sind, welcher sich auf der von der Abschirmung (128) abgewandten Seite der Wurfpaddel (102) befindet.

10. Mähdrescher (10) mit einer Emtegutrestehäcksel- und -verteilanordnung nach einem der Ansprüche 1 bis 9.

## Claims

1. A crop residue chopping and spreading arrangement with a straw chopper (60) and at least one impeller blower (100) that is arranged downstream of the straw chopper (60), the impeller blower (100) comprising impeller paddles (102) that can be set in rotation about a rotational axis (108) and a cover (128) arranged directly adjacent to an end face of the envelope cylinder of the impeller paddles (102), wherein the impeller paddles (102) receive, during operation, crop residue from the straw chopper (60) and discharge it in a discharge region onto a field and the cover (128) is provided upstream of the discharge region, with respect to the rotational direction of the impeller paddles (102), with an opening (194) through which, during operation, the impeller paddles (102) take in air and discharge it again in the discharge region.

2. The crop residue chopping and spreading arrangement according to Claim 1, wherein two impeller blowers (100) are provided that are arranged laterally one next to the other and that rotate opposite to each other.

3. The crop residue chopping and spreading arrangement according to Claim 2, wherein during operation, the impeller blowers (100) rotate inward on the side of the blower facing the straw chopper (60).

4. The crop residue chopping and spreading arrangement according to Claim 3, wherein apart from the opening (194), the cover (128) covers the rear half of the impeller blower (100), the discharge region lies in the outer, rear quadrant (186) of the impeller blower (100), and the opening (194) is located in the inner, rear quadrant (192) of the impeller blower (100).

5. The crop residue chopping and spreading arrangement according to Claim 4, wherein the opening (194) is bounded at the front by an edge (200) extending perpendicular to the forward direction.

6. The crop residue chopping and spreading arrangement according to Claim 4, wherein the opening (194) is bounded on the outside by an edge (188) extending one of backward and diagonally backward and outward (188).

7. The crop residue chopping and spreading arrangement according to Claim1, wherein in the inner, rear quadrant (192) of the impeller blower (100), a shield (144, 146) is mounted covering the side surface of the impeller blower (100) outward.

8. The crop residue chopping and spreading arrangement according to Claim 7, wherein the position of the shield (144, 146) can be changed.

9. The crop residue chopping and spreading arrangement according to Claim 1, wherein the impeller paddles (102) are mounted so that they can rotate together with a plate (130) that is located on the side of the impeller paddles (102) facing away from the shield (128).

10. A combine harvester (10) comprising a crop residue chopping and spreading arrangement according to one of the preceding claims.

## Revendications

1. Agencement de hachage et de répartition de résidus de produits de récolte, comprenant un hache-paille (60) et au moins une soufflante de dispersion (100) disposée en aval du hache-paille (60), laquelle comprend des pales de dispersion (102) pouvant être mises en rotation autour d'un axe de rotation (108) et un recouvrement (128) du côté frontal, directement adjacent aux pales de dispersion (102), et dont les pales de dispersion (102) reçoivent pendant le fonctionnement les résidus de produits de récolte provenant du hache-paille (60) et les évacuent dans un champ dans une zone d'évacuation, **caractérisé en ce que** le recouvrement (128) du côté frontal est pourvu, par rapport au sens de rotation des pales de dispersion (102) avant la zone de dépose, d'un évidement (194) à travers lequel les pales de dispersion (102) aspirent de l'air pendant le fonctionnement et l'évacuent à nouveau dans la zone d'évacuation.

2. Agencement de hachage et de répartition de résidus de produits de récolte selon la revendication 1, **caractérisé en ce qu'**il est prévu deux soufflantes de dispersion (100) tournant en sens inverse et disposées latéralement l'une à côté de l'autre.

3. Agencement de hachage et de répartition de résidus de produits de récolte selon la revendication 2, **caractérisé en ce que** les soufflantes de dispersion (100) tournent avec leurs côtés tournés vers le hache-paille (60) pendant le fonctionnement vers l'intérieur.

4. Agencement de hachage et de répartition de résidus de produits de récolte selon la revendication 3, **caractérisé en ce que** le recouvrement (128), à l'exception de l'évidement (194), recouvre la moitié arrière de la soufflante de dispersion (100), **en ce que** la zone d'évacuation est située dans le quart arrière extérieur (186) de la soufflante de dispersion (100), et **en ce que** l'évidement (194) se trouve dans le quart arrière intérieur (192) de la soufflante de dispersion (100).

5. Agencement de hachage et de répartition de résidus de produits de récolte selon la revendication 4, **caractérisé en ce que** l'évidement (194) est limité vers l'avant par une arête (200) s'étendant transversalement à la direction d'avance.

6. Agencement de hachage et de répartition de résidus de produits de récolte selon la revendication 4 ou 5, **caractérisé en ce que** l'évidement (194) est limité vers l'extérieur par une arête (188) s'étendant vers l'arrière ou obliquement vers l'arrière et vers l'extérieur.

7. Agencement de hachage et de répartition de résidus de produits de récolte selon l'une quelconque des revendications 1 à 6, **caractérisé en ce que** dans le quart arrière intérieur (192) de la soufflante de dispersion (100) est montée une protection (144, 146) recouvrant vers l'extérieur la surface d'enveloppe de la soufflante de dispersion (100).

8. Agencement de hachage et de répartition de résidus de produits de récolte selon la revendication 7, **caractérisé en ce que** la position de la protection (144, 146) est variable.

9. Agencement de hachage et de répartition de résidus de produits de récolte selon l'une quelconque des revendications 1 à 8, **caractérisé en ce que** les pales de dispersion (102) sont montées de manière rotative conjointement avec un plateau (130) qui se trouve du côté des pales de dispersion (102) opposé à la protection (128).

10. Moissonneuse-batteuse (10) comprenant un agencement de hachage et de répartition de résidus de produits de récolte selon l'une quelconque des revendications 1 à 9.
